(19) Europäisches Patentamt

European Patent Office

Office européen des brevets

(11) **EP 0 924 488 B1**

(12) **EUROPEAN PATENT SPECIFICATION**

(45) Date of publication and mention
of the grant of the patent:
**05.11.2003 Bulletin 2003/45**

(51) Int Cl.⁷: **F26B 21/08**

(21) Application number: **98123828.0**

(22) Date of filing: **15.12.1998**

(54) **Garbage disposer**

Abfallbeseitiger

Appareil pour l'élimination d'ordures

(84) Designated Contracting States:
**DE ES FR GB IT**

(30) Priority: **16.12.1997 JP 36405197**
**17.12.1997 JP 36467597**
**16.06.1998 JP 16842398**

(43) Date of publication of application:
**23.06.1999 Bulletin 1999/25**

(73) Proprietor: **Paloma Industries, Ltd.**
**Nagoya-shi, Aichi (JP)**

(72) Inventors:
• **Kobayashi, Toshihiro,**
**c/o Paloma Industries, Ltd.**
**Nagoya-shi, Aichi (JP)**
• **Ishiguro, Katsusuke, c/o Paloma Industries, Ltd.**
**Nagoya-shi, Aichi (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 860 407**     **WO-A-92/02772**
**WO-A-96/17796**     **CH-A- 262 866**
**DE-U- 9 100 341**     **DE-U- 29 506 049**
**FR-A- 980 759**     **US-A- 1 525 131**
**US-A- 1 634 931**     **US-A- 4 154 003**
**US-A- 4 204 339**     **US-A- 4 947 548**

• **PATENT ABSTRACTS OF JAPAN vol. 096, no. 012, 26 December 1996 & JP 08 200953 A (RINNAI CORP), 9 August 1996**
• **PATENT ABSTRACTS OF JAPAN vol. 098, no. 011, 30 September 1998 & JP 10 165924 A (ACT ENG:KK), 23 June 1998**
• **PATENT ABSTRACTS OF JAPAN vol. 097, no. 003, 31 March 1997 & JP 08 299943 A (BRIDGESTONE CORP), 19 November 1996**
• **PATENT ABSTRACTS OF JAPAN vol. 096, no. 005, 31 May 1996 & JP 08 014750 A (SHARP CORP), 19 January 1996**

## Description

<u>BACKGROUND OF THE INVENTION</u>

The present invention relates to a garbage disposer of the type indicated in the preamble portion of claim 1. Such a garbage disposal is known from FR-A-980,759. In said conventional garbage disposal, a fan is blowing-heated air into the entry side of a heating chamber.

More particularly, the present invention relates to a garbage disposer handily used for deodorizing and drying garbage generated in the kitchen of a common home, restaurant, school or hospital.

Conventionally, there is provided a garbage disposer by which garbage is dried so that it can be prevented from decaying and deodorized for the prevention of an offensive smell generated in the process of disposing the garbage. In general, this garbage disposer is composed in such a manner that steam generated in the process of heating the garbage is deodorized and discharged outside the garbage disposer.

From WO92/02772, there is known an apparatus for the dehydration of organic materials comprising a heating section for heating said organic materials, a condensing section for cooling gas containing steam generated from said material, communicated with the heating section, an automatic drainage means for discharging water condensed in the condensing section to the outside and further comprising a returning means for returning gas which has been cooled in the condensing section.

Furthermore, from JP 08014750 A, a garbage disposer is known which comprises a heating section for heating garbage, a condensing section for cooling gas containing steam generated from the garbage, communicated with the heating section and further comprising a drainage path for discharging water condensed in said condensing section to the outside.

For example, the Unexamined Japanese Patent Application Publication No. Hei 5-146773 discloses a garbage heating and drying device, which is composed as follows. There is provided a rotary container made of heat insulating material into which garbage is charged. While the rotary container is inclined and rotated, garbage in the rotary container is heated. Steam generated from garbage is guided into a condensing section communicated with the atmosphere. When steam is condensed in the condensing section, garbage is dried.

Therefore, it is possible to reduce the generation of an offensive smell caused by thermal decomposition of garbage.

However, the garbage heating and drying device disclosed in the above patent publication has the following disadvantages. Since garbage is dried in the atmospheric pressure in the above the garbage heating and drying device, it is necessary to raise the drying temperature so that garbage can be dried in a short period of time. Therefore, the energy cost is increased. Further, when the garbage heating and drying device is used in a room, the room temperature is raised by heat generated from the heat source of the device. Furthermore, in order to prevent garbage from heating locally, it is necessary to provide a rotating mechanism for rotating the rotary container. Accordingly, the device becomes complicated.

Garbage is mainly produced in the kitchen. Therefore, it is convenient to arrange and use a garbage disposer in the kitchen. However, when the garbage disposer is arranged in the kitchen, various problems are caused and the environment is deteriorated in the kitchen, for example, an offensive smell leaks and humidity in the kitchen is raised when steam is discharged from the garbage disposer, and further temperature in the kitchen is raised by the influence of a heat source incorporated into the garbage disposer. For the above reasons, it is difficult to arrange the garbage disposer in the kitchen. Therefore, the present applicant previously proposed an invention of a garbage disposer characterized as follows. The garbage disposer includes a heating chamber for heating garbage and a condensing chamber for cooling and condensing steam. A space, which communicates the heating chamber with the condensing chamber, is tightly closed under the condition that air is purged from this space by steam generated when garbage is heated. Pressure in this tightly closed space is made negative by increasing a quantity of condensed water, so that garbage can be dried. When the above arrangement is adopted, it is possible to prevent an offensive smell from leaking out from a gap between the cover and the seal by the effect of negative pressure, and at the same time the boiling point can be lowered and an intensity of energy necessary for heating garbage can be decreased. Further, when offensive smell components generated from garbage are discharged into a drainpipe together with condensed water, the offensive smell and steam are not discharged from the garbage disposer. Therefore, this type garbage disposer can be used in the kitchen.

According to the above arrangement, since air is pushed out from the space by the action of steam, gas filling the space is mainly composed of steam. Due to the foregoing, a coefficient of volumetric contraction can be enhanced when gas is cooled in the condensing chamber. Accordingly, steam generated in the heating chamber can be made to flow into the condensing chamber smoothly. However, from an actual view point, it is difficult to enhance the degree of vacuum because the handling and the structure become complicated and further the equipment cost is raised. Therefore, it is considered that a considerably large quantity of air still exists in the tightly closed space. Accordingly, air remains as it is in the condensing chamber after cooling. The thus remaining air obstructs the flow of steam from the heating chamber into the condensing chamber. Consequently, the steam generating efficiency in the heating chamber is deteriorated. As a result, it is impossible to provide a high drying performance.

In the arrangement described above, the following problems may be encountered. It is important to effectively condense steam generated from garbage. However, in order to enhance the cooling efficiency, the above arrangement has a cooling structure for cooling steam by sending a blast of air from a fan arranged outside. Therefore, the cooling structure becomes complicated and the equipment cost is raised.

## SUMMARY OF THE INVENTION

It is an object of the present invention to make gas flow from the heating chamber into the condensing chamber smoothly by solving the above problems.

It is an object of the present invention to solve the above problems and enhance the cooling efficiency of cooling steam by an arrangement at low equipment cost.

In particular, the leakage of offensive smell components should be reduced.

The above object is achieved by the subject matter of claim 1.

According to the present invention, the automatically adjusting drainage means is communicated with the high pressure side of the returning means. Therefore, the maximum pressure on the high pressure side of the returning means is limited to a value not higher than a predetermined value. Accordingly, the heating chamber can be kept in a depressurised condition or a slightly positive pressure condition, and the leakage of offensive smell components can be reduced.

A preferred embodiment of the inventive garbage disposer is defined in depending claim 2.

## BRIEF DESCRIPTION OF THE DRAWINGS

Fig. 1 is an arrangement view showing an outline of an example of the garbage disposer of the present invention.
Fig. 2 is an arrangement view showing an outline of the condensing section provided with a plurality of pipes.
Fig. 3 to 3D are schematic illustration showing a relation between a pressure in the heating chamber and a change in the level of water in the tank.
Fig. 4 is a view showing a change with time of pressure in the heating chamber and also showing a change with time of pressure on the high pressure side of the circulation fan.

## DETAILED DESCRIPTION OF THE PREFERRED EMBODIMENTS

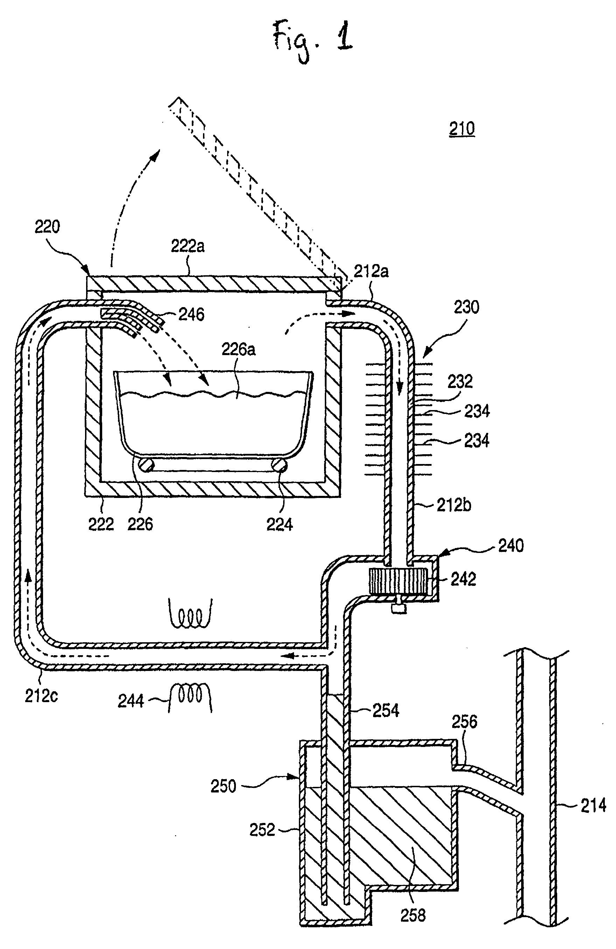

Referring to the accompanying drawings, the preferred embodiments of the present invention will be explained as follows. Fig. 1 is an arrangement view showing an outline of the garbage disposer of the present invention. In Fig. 1, the garbage disposer 210 includes: a heating section 220 for heating garbage; a condensing section 230 for condensing steam generated from garbage; a returning means 240 for forcibly returning air cooled in the condensing section 230 to the heating section 220; and an automatically adjusting drainage means 250 for draining condensed water generated in the condensing section 230 and for automatically adjusting pressure in the garbage disposer 210 at the same time.

The heating section 220 is connected with one end of the condensing section 230 via the communicating passage 212a, and the other end of the condensing section 230 is connected with the low pressure side of the returning means 240 via the communicating passage 212b. The high pressure side of the returning means 240 is connected with the heating section 220 via the communicating passage 212c and the blowing nozzle 246. Due to the above arrangement, air in the garbage disposer 210 is circulated in the heating section 220 and the condensing section 230. Further, the automatically adjusting drainage means 250 is connected with the high pressure side of the returning means 240.

The heating section 220 is composed in such a manner that a heater 224 for heating the processing tank is arranged in the bottom portion of a heating chamber 222, which can be tightly closed, having a heat insulating structure. The cover 222a is arranged in an upper portion of the heating chamber 222, so that the processing tank 226 charged with garbage 226a can be accommodated in the heating chamber 222. In this connection, instead of the heater 224 for heating the processing tank, garbage 226a may be heated by means of gas burners or microwaves.

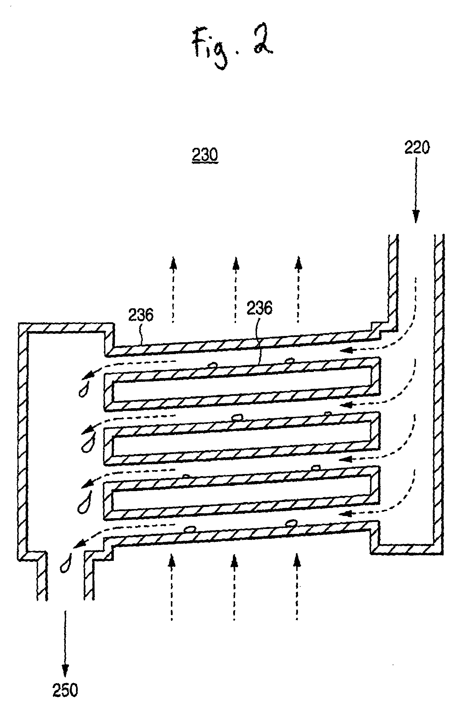

The condensing section 230 is composed of a fin tube 232 having a large number of radiating fins 234, 234, .... As long as wet air containing steam can be cooled and divided into condensed water and dry air in the condensing section 230, any structure for condensation may be adopted. For example, it is possible to use a structure of the condensing section 230 in which a plurality of pipes 236, 236, ... are obliquely arranged as shown in Fig. 2 and the pipes 236, 236 ... are cooled by a natural draft force. The cooling structure of the condensing section is not limited to natural cooling, for example, the cooling structure of forced cooling may be adopted, in which a fan is arranged and cooling is conducted forcibly.

The returning means 240 is composed of a circulation fan 242. By the action of the circulation fan 242, a predetermined pressure difference is generated between the communicating passages 212b and 212c. Due to the pressure difference, gas introduced onto the low pressure side can be discharged onto the high pressure side. In this connection, the high pressure side of the circulation fan 242 is connected with one end of the communicating passage 212c, and the other end of the communicating passage 212c is connected with the blowing nozzle 246 arranged in the heating chamber 222. The heater 244 for heating gas is arranged in the communicating passage 212c. Therefore, it is possible to heat gas passing in the communicating passage 212c.

The automatically adjusting drainage means 250 includes: a tank 252 for storing condensed water; a water pipe 254 arranged downward facing the bottom surface of the tank 252; and a drainage pipe 256 arranged on the side of the tank 252. The water pipe 254 is connected with the communicating passage 212c and guides condensed water, which has been condensed in the condensing section 230 and discharged from the returning means 240, into the tank 252.

The drainage pipe 256 is arranged at a position located at a predetermined height from the bottom surface of the tank 252 so that a portion of condensed water in the tank 252 can be drained into the drainpipe 214 when a quantity of condensed water staying in the tank 252 has reached a predetermined value.

The maximum pressure on the high pressure side of the circulation fan 242 is determined by a positional head corresponding to the length from the maximum level of water in the tank 252 provided in the automatically adjusting drainage means 250 to the forward end of the water pipe 254. The device is arranged so that this positional head can be smaller than the pressure difference generated by the circulation fan 242.

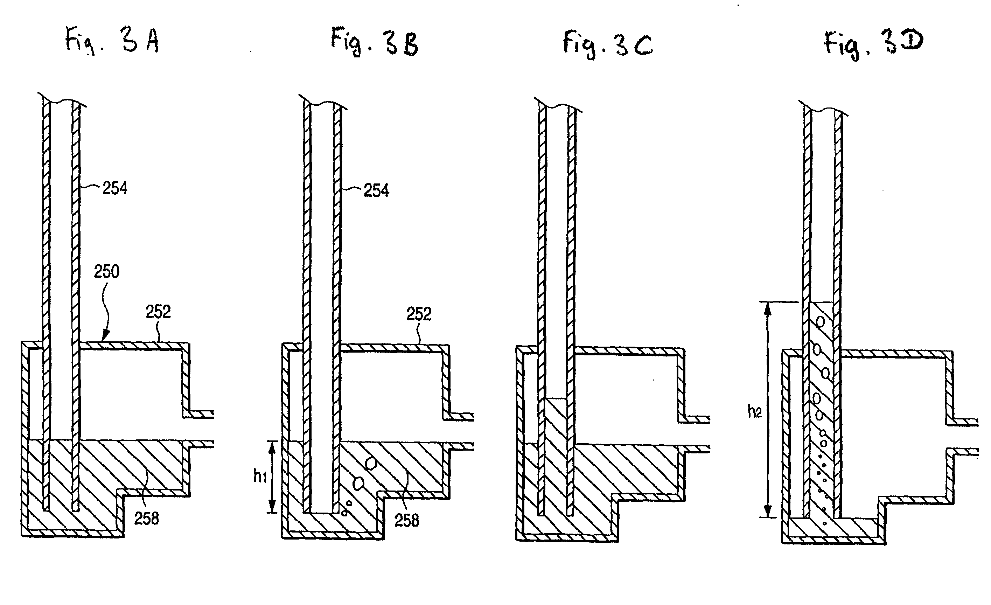

Next, operation of the garbage disposer 210 shown in Fig. 1 will be explained as follows. First, referring to Figs. 3A to 3D, a case will be explained in which the garbage disposer 210 is used under the condition that the tank 252 is filled with condensed water to the maximum water level.

First, the cover 222a of the heating chamber 222 is opened, and garbage 226a is charged into the processing tank 226 and then the cover 222a is closed. At this time, the heating chamber 222 is filled with air, and pressure in the heating chamber 222 is the same as the atmospheric pressure. Therefore, the level of water in the tank 252 of the automatically adjusting drainage means 250 is the same as the level of water in the water pipe 254. This state is illustrated in Fig. 3A.

Next, the heater 224 for heating the processing tank is turned on, so that the processing tank 226 is heated. At the same time, the circulation fan 242 and the heater 244 for heating gas are turned on. When the heater 224 for heating the processing tank is turned on, the processing tank 226 is heated, and steam is generated from garbage 226a, and air in the heating chamber 222 is heated and expanded at the same time. Accordingly, pressure in the heating chamber 222 is increased. However, the circulation fan 242 generates a pressure difference. Since the communicating passage 212c and water pipe 254 are connected with the high pressure side of the fan 242, pressure of the fan 242 is added to an increase in pressure in the heating chamber 222. The thus obtained pressure is transmitted to condensed water 258 in the water pipe 254, so that the surface of condensed water 258 in the water pipe 254 is pushed down. When the surface of water in the water pipe 254 has reached the forward end of the water pipe 254, a portion of air in the heating chamber 222 is discharged from the forward end of the water pipe 254, and the rising of pressure in the heating chamber 222 is stopped. This state is illustrated in Fig. 3B.

The highest pressure loss is caused by the blowing nozzle 246 in this circulation path. In other words, since pressure loss is seldom caused in the communicating passage 212a and the condensing section 230, pressure in the heating chamber 222 is a value obtained when pressure generated by the fan 242 is subtracted from pressure in the water pipe 254.

The heater 224 for heating the processing tank is controlled being turned on and off by a thermistor (not shown) arranged in the bottom portion of the heating chamber 222 so that the temperature in the processing tank 226 can be controlled to a predetermined value. When wrappers are contained in garbage 226a, they are decomposed when the temperature in the processing tank 226 exceeds 130°C, and noxious chlorine gas is generated. Therefore, the processing temperature is preferably kept to be not higher than 130°C.

When the circulation fan 242 is turned on, air remaining in the heating chamber 222 is forcibly conveyed to the condensing section 230 together with steam generated from garbage 226a. At this time, wet air containing steam is cooled by the radiating fins 234, 234, ..., and the temperature is decreased to the dew point. Accordingly, steam is condensed to water.

Most of the offensive smell components generated from garbage 226a are dissolved into condensed water. Therefore, air in the condensing section 230 is deodorized. Since the heating chamber 222 is shut off from the atmosphere by condensed water staying in the tank 252 of the automatically adjusting drainage means 250, pressure in the circulating path provided from the heating chamber 222 to the communicating path 212b is decreased by the condensation of steam.

After condensed water and dried and deodorized air have been discharged from the condensing section 230, it flows in the communicating passage 212b and reaches the circulation fan 242. Condensed water passes through the circulation fan 242 and flows and drops into the water pipe 254 as it is. Then, condensed water stays in the tank 252. When the tank 252 is overflowing with condensed water, condensed water passes through the drainage pipe 256 and discharges into the drainpipe 214.

On the other hand, dried and deodorized air is pressurized by the circulation fan 242 and sent to the communicating passage 212c. Since pressure on the lower pressure side of the circulation fan 242 is decreased when steam is condensed in the condensing section 230, pressure on the high pressure side of the circulation fan 242 is decreased in accordance with that. Therefore, the condensation of steam proceeds. When pressure on the high pressure side of the circulation fan 242 is decreased to a value lower than the atmospheric pressure, condensed water 258 is sucked up from the tank 252 into the water pipe 254. Accordingly, the level of water in the water pipe 254 is raised. This state is illustrated in Fig. 3C.

After air has been sent into the communicating passage 212c, it is heated by the heater 244 for heating gas and sent to the blowing nozzle 246. In this way, heated air is jetted out from the blowing nozzle 246 to garbage 226a in the processing tank 226 accommodated in the heating chamber 222.

As described above, under the condition that the heating chamber 222 is kept at a negative pressure, air heated by the heater 244 for heating air is directly jetted out from the nozzle 246 to garbage 226a. Further, steam generated from garbage 226a is forcibly conveyed to the condensing section 230 together with air in the heating chamber 222. Therefore, the evaporation of steam from garbage 226a can be facilitated. When the communicating passage 212c is heated, the occurrence of dew condensation in the communicating passage 212c can be prevented.

In the beginning of operation of the circulation fan 242, a quantity of condensed water is large. Therefore, pressure in the communicating passage 212c continues to decrease, and condensed water in the tank 252 continues to be sucked up into the water pipe 254. Then, pressure in the water pipe 212c further decreases. When a forward end portion of the water pipe 254 is exposed from the surface of condensed water 258 remaining in the tank 252, air enters the water pipe 254 from the forward end portion of the water pipe 254, and a decrease in pressure in the communicating passage 212c is stopped. This state is illustrated in Fig. 3D.

The reason why air is introduced into the communicating passage 212c when pressure in the communicating passage 212c is decreased to a value lower than a predetermined value is that it is necessary to prevent condensed water from flowing backward to the heating chamber 222 and also it is necessary to smoothly convey steam generated from garbage 226a in the processing tank 226 to the condensing section 230. In order to convey steam to the condensing section 230 smoothly, it is necessary to provide a predetermined quantity of air to be used as a carrier for carrying steam.

Since the automatically adjusting drainage means 250 is arranged, it is possible to automatically adjust the pressure in the communicating passage 212c so that the pressure can be kept in a range from the maximum pressure to the minimum pressure determined by the capacity of the tank 252, length of the water pipe 254, cross-sectional area of the water pipe 254 and position at which the water pipe 256 is attached.

As described above, air remaining in the heating chamber 222 circulates in the heating section 220 and the condensing section 230 as a carrier for carrying steam generated from garbage 226a until the completion of drying. After water has been completely removed from garbage 226a, the heater 224 for heating the processing tank and the heater 244 for heating gas are turned off, and further the circulation fan 242 is turned off. In this way, the drying of garbage 226a is completed.

A description will be given to the principle by which the heating chamber 222 is kept at a negative pressure or a slightly positive pressure in the steady state in the garbage disposer of the present invention. Since the high pressure side of the returning means 240 is connected to the automatically adjusting drainage means 250, the maximum pressure and the minimum one on the high pressure side of the returning means 240 are determined by the automatically adjusting drainage means 250. The maximum value of $P_2$ is equal to positional head $h_1$ which is a positional head from the maximum level of condensed water 258 in the tank 252 to the forward end of the water pipe 254, wherein $P_2$ is the pressure on the high pressure side. Positional head $h_1$ is referred to as $h_1$ in this specification hereinafter.

The minimum value of $P_2$ on the high pressure side is equal to $-V_0/a$, wherein $V_0$ is a volume of condensed water 258 stored between the maximum level of condensed water 258 and the forward end of the water pipe 254, and "a" is a cross-section area of the water pipe 254. When this value is substituted by $-h_2$, a range of fluctuation of $P_2$ is expressed by the following formula 1.

[Formula 1]

$$-h_2 \leq P_2 \leq h_1$$

On the other hand, the following formula 2 is established by $P_1$, $P_2$ and $\Delta P$, wherein $P_1$ is a pressure in the heating chamber 222, that is, $P_1$ is a pressure on the low pressure side of the returning means 240, and $\Delta P$ is a pressure difference generated by the returning means 240.

[Formula 2]

$$P_2 = P_1 + \Delta P$$

The following formula 3 can be obtained from formula 2.

[Formula 3]

$$P_1 = P_2 - \Delta P$$

According to formula 1, the maximum value of $P_2$ is restricted by the automatically adjusting drainage means 250 so that the maximum value of $P_2$ can be not higher than $h_1$. According to formula 3, $P_1$ is obtained when $\Delta P$ is subtracted from $P_2$. Therefore, $P_1$ is kept at a value not higher than a slightly positive pressure. When $h_1$ is not higher than $\Delta P$, $P_1$ is equal to the atmospheric pressure or lower than the atmospheric pressure at all times.

For example, in the case where the circulation fan 242, the value of $\Delta P$ of which is 4900 N/m$^2$ (50 mmAq), is used as the returning means 240, the automatically adjusting drainage means 250 is designed so that $h_1$ can be 40 mm. Due to the above, $P_2$ does not become a value not lower than 3920 N/m$^2$ (40 mmAq). Accordingly, $P_1$ can be a negative value at all times. Therefore, it is possible to keep the heating chamber 222 in a depressurized condition.

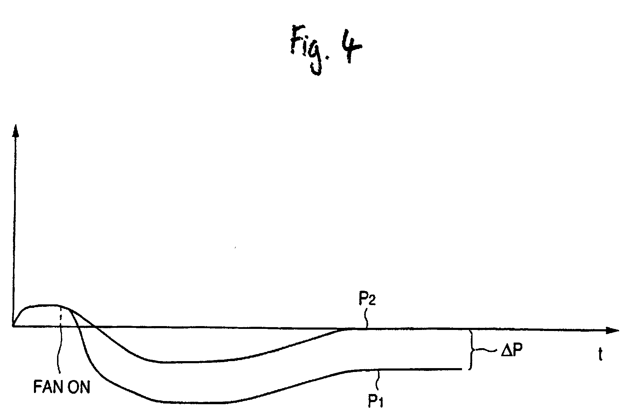

Fig. 4 is a view showing an example of a change with time of pressure $P_1$ in the heating chamber 222 of the garbage disposer 210 arranged in the manner described above and also showing an example of a change with time of pressure $P_2$ on the high pressure side of the circulation fan 242. At first, garbage 226a is charged into the processing tank 226, and the cover 222a is closed. At this time, both $P_1$ and $P_2$ are O N/m$^2$ (0 mm Aq), that is, both $P_1$ and $P_2$ are equal to the atmospheric pressure. Under the above condition, the heater 224 for heating the processing tank, the circulation fan 242 and the heater 244 for heating gas are turned on.

When the heater 224 for heating the processing tank is turned on, temperature in the heating chamber 222 is raised, and $P_1$ and $P_2$ are gradually increased. When $P_1$ and $P_2$ are increased to a value corresponding to head $h_1$, the increase of $P_1$ and $P_2$ is saturated.

When the circulation fan 242 is turned on, steam generated from garbage 226a is forcibly sent to the condensing section 230 and cooled. Accordingly, both $P_1$ and $P_2$ are suddenly decreased and become negative. A difference between $P_1$ and $P_2$ becomes substantially equal to the pressure difference $\Delta P$ generated by the circulation fan 242.

In accordance with the progress of condensation of steam, $P_2$ continues to decrease. When $P_2$ becomes a value corresponding to head $-h_2$, air enters the water pipe 254 from the forward end portion. Due to the foregoing, the decrease of pressure of $P_1$ and $P_2$ is stopped. When garbage 226a is continuously heated while a quantity of heat given to the processing tank by the heater 224 is kept constant, steam generated from garbage 226a is gradually reduced, and a quantity of heat taken away by the condensing section 230 is reduced.

As a result, air circulating in the garbage disposer 210 is expanded, and $P_1$ and $P_2$ are gradually increased. Since the upper limit of $P_2$ is restricted by $h_1$ as described above, even if air circulating in the garbage disposer 210 is continuously heated, $P_1$ does not become positive when the pressure difference $\Delta P$ generated by the circulation fan 242 is not less than $h_1$.

Due to the foregoing, in the steady state in which the generation of steam in the heating section 220 and the condensation of steam in the condensing section 230 are continuously proceeding, even if a quantity of heat given by the heating section 220 and a quantity of heat taken away by the condensing section 230 are not balanced with each other, pressure in the heating chamber 222 can be kept at a negative pressure or a slightly positive pressure at all times. When pressure in the heating chamber 222 can be kept at a negative pressure or a slightly positive pressure at all times in the steady state, there is no possibility that the offensive smell and steam leak out from the heating chamber 222 even if the heating chamber 222 is not sealed so completely.

In this connection, in the beginning of drying, the heating chamber 222 is kept at a positive pressure, however, the value of the positive pressure is relatively low, and a period of time in which the heating chamber 222 is kept at a positive pressure is relatively short compared with the accumulated time required for drying garbage 226a. Therefore, even if an inexpensive sealing member is used, there is no possibility that the offensive smell and steam leak out.

Next, a case will be described as follows, in which the garbage disposer 210 is used under the condition that condensed water is not staying in the tank 252. Garbage 226a is charged into the processing tank 226, and the cover 222a is closed. Then, the heater 224 for heating the processing tank, the circulation fan 242 and the heater 244 for heating gas are turned on. Then, steam is generated in the heating chamber 222 and air in the heating chamber 222 is expanded. Expanded air is discharged into the drainpipe 214 via the communicating hole 212c from the automatically adjusting drainage means 240. Accordingly, pressure in the heating chamber 222 becomes lower than the atmospheric pressure by $\Delta P$. Accordingly, there is no possibility that the offensive smell and steam leak out from the heating chamber 222.

Steam generated from garbage 226a is condensed to water in the condensing section 230. The thus condensed water passes through the returning means 240 and the water pipe 254 and stays in the tank 252. When the level of the forward end portion of the water pipe 254 becomes lower than the level of the surface of condensed water 258 staying in the tank 252, the heating chamber 222 is shut off from the atmosphere.

After that, operation is conducted in the same manner as that in the case where the tank 252 is filled with condensed water from the beginning. That is, while pressure in the heating chamber 222 is being automatically adjusted by the automatically adjusting drainage means 250, garbage 226a is being dried. When $h_1$ is not higher than $\Delta P$, $P_1$ can be kept negative in the steady state at all times in the same manner as that described before.

In the above embodiment, simultaneously when the heater 224 for heating the processing tank is turned on, the circulation fan 242 and the heater 244 for heating gas are set in motion. However, after a predetermined period of time has passed from the start of heating conducted by the heater 224 for heating the processing tank, the circulation fan 242 and the heater 244 for heating gas may be set in motion. For example, the temperature, humidity or pressure in the condensing section 230 or the heating chamber 222 is detected, or alternatively the level of water in the tank 252 of the automatically adjusting drainage means 250 is detected, and the circulation fan 242 and the heater 244 for heating gas may be set in motion according to the detected value.

In the above arrangement, when gas flowing in the communicating passage 212c is heated by the heater 244 for heating gas, the generation of steam from garbage 226a is facilitated, however, the heater 244 for heating gas is not necessarily required. Water contained in garbage 226a may be evaporated by a blast of hot air heated only by the heater 244 for heating gas without using the heater 224 for heating the processing tank.

In the above embodiment, the automatically adjusting drainage means 250 includes: the tank 252; the water pipe 254 arranged downward in the tank 252 while the forward end portion of the water pipe 254 faces the bottom surface of the tank 252; and the drainage pipe 256. However, the garbage disposer may have an S-shaped tube including: a downward path in which condensed water flows downward from the condensing section 230; an upward path which rises upward from the downward path; and a drainage flow path in which water flows downward again, connected to the drainpipe. When the above arrangement is adopted, the same effect as that of the above embodiment can be provided.

As described in detail above, gas in the heating section containing a large quantity of steam is made to flow into the condensing section smoothly, and gas cooled in the condensing section containing a small quantity of steam is returned to the heating section. Due to the foregoing, water contained in garbage can be effectively evaporated, and at the same time generated steam can be effectively condensed. Therefore, the drying performance can be enhanced.

The garbage disposer of the present invention includes: a returning means for forcibly sending gas, which contains steam generated in the heating chamber, to the condensing section and for forcibly returning gas, which has been discharged from the condensing section, to the heating chamber; and an automatically adjusting drainage means for discharging condensed water outside and for automatically adjusting pressure in the heating chamber at the same time, wherein the automatically adjusting drainage means is communicated with the high pressure side of the returning means. Accordingly, the heating chamber is kept at a slightly positive pressure or a pressure lower than that. Therefore, it is possible to prevent the offensive smell and steam from leaking out.

Preferably, when a difference between the maximum pressure on the high pressure side of the returning means and the atmospheric pressure is not higher than the pressure difference generated by the returning means, the heating chamber can be kept at a negative pressure in the steady state at all times. Accordingly, even if a quantity of heat given by the heating section and a quantity of heat taken away by the condensing section are not balanced with each other, it is possible to prevent the offensive smell and steam from leaking out from the heating section. Therefore, operation of the garbage disposer can be simplified.

Therefore, for example, when the garbage disposer is used in the kitchen of a common home, it is possible to prevent garbage from decaying and it is also possible to deodorize garbage without deteriorating the environment of the kitchen by preventing a leakage of an offensive smell, a rise in humidity caused by the discharge of steam and a rise in temperature caused by a heat source of the garbage disposer. Accordingly, the garbage disposer of the present invention can provide a very great effect from the industrial viewpoint.

**Claims**

1. A garbage disposer comprising:

 - a heating section (220) for heating garbage, including a heating chamber (222),
 - a heater (224, 244),
 - a condensing section (230) for cooling gas containing steam generated from said garbage, said condensing section being communicated with said heating section,
 - an automatically adjusting drainage means (250) for draining water condensed in said condensing section and also for automatically adjusting pressure in said heating chamber (222), and
 - a returning means (240, 242) for forcibly returning gas cooled in said condensing section to said heating section,
 - a circulation path for circulating gas from said heating chamber (222) via said condensing section (230), and said returning means (240, 242) back to said heating chamber (222),

**characterized in that** said automatically adjusting drainage means is connected to the high pressure side of said returning means.

2.  The garbage disposer according to claim 1, further comprising a blowing nozzle (246) for blowing gas, which has been returned to said heating section (220), toward the garbage.

**Patentansprüche**

1.  Abfallbeseitigungseinrichtung, die umfasst:

    einen Erhitzungsabschnitt (220) zum Erhitzen von Abfall, der eine Erhitzungskammer (222) enthält,

    eine Heizeinrichtung (224, 244),

    einen Kondensierabschnitt (230) zum Abkühlen von Gas, das Dampf enthält, der aus dem Abfall erzeugt wird, wobei der Kondensierabschnitt mit dem Erhitzungsabschnitt in Verbindung steht,

    eine sich automatisch einstellende Ablaufeinrichtung (250) zum Ablaufen von in dem Kondensierabschnitt kondensiertem Wasser und zum automatischen Einstellen von Druck in der Erhitzungskammer (222), und

    eine Rückführeinrichtung (240, 242) zum zwangsweisen Zurückführen von in dem Kondensierabschnitt abgekühltem Gas zu dem Erhitzungsabschnitt,

    einen Zirkulationsweg zum Zirkulieren von Gas von der Erhitzungskammer (222) über den Kondensierabschnitt (230) und die Rückführeinrichtung (240, 242) zurück zu der Erhitzungskammer (222),

    **dadurch gekennzeichnet, dass** die sich automatisch einstellende Ablaufeinrichtung mit der Hochdruckseite der Rückführeinrichtung verbunden ist.

2.  Abfallbeseitigungseinrichtung nach Anspruch 1, die des Weiteren eine Blasdüse (246) zum Blasen von Gas, das zu dem Erhitzungsabschnitt (222) zurückgeführt worden ist, auf den Abfall zu umfasst.

**Revendications**

1.  Appareil pour l'élimination d'ordures, comportant :

    -  une section de chauffage (220) destinée à chauffer des ordures, comprenant une chambre de chauffage (222),

    -  un dispositif de chauffage (224, 244),
    -  une section de condensation (230) destinée à refroidir de la vapeur contenant du gaz généré par lesdites ordures, ladite section de condensation étant en communication avec ladite section de chauffage,
    -  des moyens de purge à ajustement automatique (250) destinés à purger l'eau condensée dans ladite section de condensation et destinés également à ajuster automatiquement la pression dans ladite chambre de chauffage (222), et
    -  des moyens de retour (240, 242) destinés à renvoyer de manière forcée du gaz refroidi dans ladite section de condensation vers ladite section de chauffage,
    -  un passage de circulation pour la circulation du gaz depuis ladite chambre de chauffage (222) à travers ladite section de condensation (230), et lesdits moyens de retour (240, 242), jusqu'à revenir dans ladite chambre de chauffage (222),

    **caractérisé en ce que** lesdits moyens de purge à ajustement automatique sont reliés au côté haute pression desdits moyens de retour.

2.  Appareil pour l'élimination d'ordures selon la revendication 1, comportant en outre une buse de soufflage (246) destinée à souffler du gaz, qui a été renvoyé vers ladite section de chauffage (220), vers les ordures.

# Fig. 1

Fig. 2

Fig. 3A    Fig. 3B    Fig. 3C    Fig. 3D

254
250
252
258

254
252
$h_1$
258

252

$h_2$

EP 0 924 488 B1

Fig. 4